**Europäisches Patentamt**

**European Patent Office**

**Office européen des brevets**

(19)

(11) **EP 1 253 703 A1**

(12) **EUROPEAN PATENT APPLICATION**

(43) Date of publication:
**30.10.2002 Bulletin 2002/44**

(51) Int Cl.7: **H02K 53/00**

(21) Application number: **01114425.0**

(22) Date of filing: **15.06.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **25.04.2001 JP 2001127231**<br><br>(71) Applicants:<br>• **Yasuda, Teruyoshi**<br>  **Kawagoe-shi, Saitama-ken 350-1165 (JP)** | • **Ota, Sadamasa**<br>  **Nagano-ken 381-3301 (JP)**<br><br>(72) Inventors:<br>• **Yasuda, Teruyoshi**<br>  **Kawagoe-shi, Saitama-ken 350-1165 (JP)**<br>• **Ota, Sadamasa**<br>  **Nagano-ken 381-3301 (JP)**<br><br>(74) Representative: **Schickedanz, Willi, Dr. Dipl.-Ing.**<br>  **Langener Strasse 68**<br>  **63073 Offenbach (DE)** |

(54) **Power plant**

(57)     A power plant comprising axle (13) fitted with a turning force takeout part and, coaxially arranged thereon, generator (10) capable of outputting a power and rotor (20) driven and rotated by an electromagnetic force imparting means, said electromagnetic force imparting means capable of producing an electromagnetic force with the use of an input power, wherein, with respect to the axle (13), a dimension of position of imparting of a rotary driving force to the rotor in the electromagnetic force imparting means is larger than a dimension of position of output power production in the generator (10) to thereby enable takeout, from the turning force takeout part of the axle (13), of a rotational energy greater than an energy equivalent to aninput power applied to the electromagnetic force imparting means.

Fig.1

EP 1 253 703 A1

## Description

FIELD OF THE INVENTION

The present invention relates to a power plant wherein permanent magnets and electromagnets are combined with each other so as to obtain an increased rotational energy.

BACKGROUND OF THE INVENTION

Inventions wherein permanent magnets and electromagnets are combined with each other to thereby constitute a power plant in an attempt to obtain an output greater than an input power have been proposed (see, for example, Japanese Patent Application Laid-open Specification No. 7(1995)-87725).

However, for example, the power plant disclosed in the above Japanese Patent Application Laid-open Specification No. 7(1995)-87725 has a complex constitution including not only permanent magnets and electromagnets but also, for example, a rotary balancer. Further, this power plant has a drawback in that it is not so constituted as to utilize the torque of a rotor with the result that any desirable energy efficiency cannot necessarily be attained.

OBJECT OF THE INVENTION

The present invention has been made in view of the above state of the prior art. Specifically, it is an object of the present invention to provide a power plant which has a simple constitution and enables taking out a rotational energy greater than an input energy with high efficiency in accordance with the demand for resource saving and energy saving.

The foregoing and other objects, features and advantages of the present invention will become apparent from the following detailed description and appended claims taken in connection with the accompanying drawings.

SUMMARY OF THE INVENTION

According to the present invention, there is provided a power plant comprising:

an axle fitted with a turning force takeout part and, coaxially arranged thereon, a generator capable of outputting a power and a rotor driven and rotated by an electromagnetic force imparting means, the electromagnetic force imparting means capable of producing an electromagnetic force with the use of an input power,

wherein, with respect to the axle, a dimension of position of imparting of a rotary driving force to the rotor in the electromagnetic force imparting means is larger than a dimension of position of output power production in the generator to thereby enable takeout, from the turning force takeout part of the axle, of a rotational energy greater than an energy equivalent to an input power applied to the electromagnetic force imparting means.

The present invention is characterized in that, with respect to the axle, a dimension of position of imparting of a rotary driving force to the rotor in the electromagnetic force imparting means is larger than a dimension of position of output power production in the generator. Thus, there can be provided a power plant which utilizes the torque of rotor attributed to the dimensional difference of the two positions and which has a simple constitution and enables takeout, from the turning force takeout part of the axle, of a rotational energy greater than an input power applied to the electromagnetic force imparting means. Further, an output power greater than the input power applied to the electromagnetic force imparting means can be taken out from the generator.

The power plant of the present invention preferably comprises:

an axle fitted with a turning force takeout part, a rotor arranged in a first location of the axle, driven and rotated by an electromagnetic force imparting means and having permanent magnets in its outer periphery, the electromagnetic force imparting means fitted with n electromagnets and capable of producing an electromagnetic force with the use of an input power, and a generator fitted with a magneto coil and arranged in a second location of the axle,

wherein, with respect to the axle, a dimension of position of n electromagnets capable of imparting of a rotary driving force to the rotor in the electromagnetic force imparting means is larger than a dimension of position of magneto coil in the generator to thereby enable takeout, from the turning force takeout part of the axle, of a rotational energy greater than an energy equivalent to an input power applied to the electromagnetic force imparting means.

This feature of the present invention enables providing a power plant which utilizes the torque of rotor attributed to the dimensional difference, with respect to the axle, between the position of n electromagnets and the position of magneto coil of generator and which has a simple constitution and enables takeout, from the turning force takeout part of the axle, of a rotational energy greater than an energy equivalent to an input power applied to the electromagnetic force imparting means. Further, an output power greater than the input power applied to the electromagnetic force imparting means can be taken out from the generator.

Also, the power plant of the present invention can preferably comprise:

an axle fitted with a turning force takeout part,
a rotor arranged in a first location of the axle and fitted with groups of circularly arranged n permanent magnets, the permanent magnets composed of combinations of N pole and S pole oppositely arranged with a given spacing therebetween,
an electromagnetic force imparting means fitted with circularly and concentrically arranged n exciting coils interposed between the N poles and S poles of each of the permanent magnet groups of the rotor, the n exciting coils energized by an input power and cooperating with the groups of n permanent magnets to thereby exert such a magnetic action that a rotary driving force is produced to thereby drive and rotate the rotor, and
a generator fitted with a magneto coil and arranged in-a second location of the axle,

wherein, with respect to the axle, a dimension of position of n electromagnets capable of imparting of a rotary driving force to the rotor in the electromagnetic force imparting means is larger than a dimension of position of magneto coil in the generator to thereby enable takeout, from the turning force takeout part of the axle, of a rotational energy greater than an energy equivalent to an input power applied to the electromagnetic force imparting means. In this power plant, in the rotor, the groups of n permanent magnets composed of N pole and S pole combinations are combined with the n exciting coils of the electromagnetic force imparting means in a single-stage arrangement or plural-stage arrangement.

This feature of the present invention enables providing a power plant which can employ a sandwich structure composed of the groups of n permanent magnets consisting of N pole and S pole combinations and the n exciting coils, which utilizes the torque of rotor attributed to the dimensional difference, with respect to the axle, between the position of n electromagnets and the position of magneto coil of generator and which enables efficient takeout, from the turning force takeout part of the axle, of a rotational energy greater than an energy equivalent to an input power applied to the electromagnetic force imparting means. Further, an output power greater than the input power applied to the electromagnetic force imparting means can be efficiently taken out from the generator.

BRIEF DESCRIPTION OF THE DRAWING

Fig. 1 is a schematic sectional view of one form of power plant according to the present invention;
Fig. 2 is a schematic top view of one form of power plant according to the present invention;
Fig. 3 is an explanatory view of the first model presented for explaining the principle of the power plant of the present invention;
Fig. 4 is an explanatory view of the second model presented for explaining the principle of the power plant of the present invention;
Fig. 5 is an explanatory view of the third model presented for explaining the principle of the power plant of the present invention;
Fig. 6 is an explanatory view of the fourth model presented for explaining the principle of the power plant of the present invention;
Fig. 7 is an explanatory view of the fifth model presented for explaining the principle of the power plant of the present invention;
Fig. 8 is an explanatory view of the sixth model presented for explaining the principle of the power plant of the present invention;
Fig. 9 is a block diagram of rotational position detecting means provided in the power plant of the present invention;
Fig. 10 is a circuit diagram including a photocoupler as a representative example of the rotational position detecting means, a time constant circuit, a driving circuit having a transistor and an electromagnet according to the present invention;
Fig. 11 is a diagram of the respective driving waveforms of electromagnets according to the present invention;
Fig. 12 is a schematic top view of another form of power plant according to the present invention;
Fig. 13 is a schematic top view of a further form of power plant according to the present invention;
Fig. 14 is a schematic side view of still a further form of power plant according to the present invention;
Fig. 15 is a schematic front view of the power plant of Fig. 14;
Fig. 16 is a diagram of particular respective driving waveforms of n electromagnets according to the present invention;
Fig. 17 is a diagram of other respective driving waveforms of n electromagnets according to the present invention;
Fig. 18 is a schematic side view of still a further form of power plant according to the present invention;
Fig. 19 is a schematic top view of still a further form of power plant according to the present invention;
Fig. 20 is a schematic side view of one form of power plant having two rotors according to the present invention;
Fig. 21 is an explanatory view of a manner of mutual attraction between permanent magnet and electromagnet; and
Fig. 22 is an explanatory view of a manner of mutual attraction between permanent magnet and electromagnet.

DETAILED DESCRIPTION OF THE INVENTION

The power plant of the present invention will be described in detail below with reference to the appended drawings.

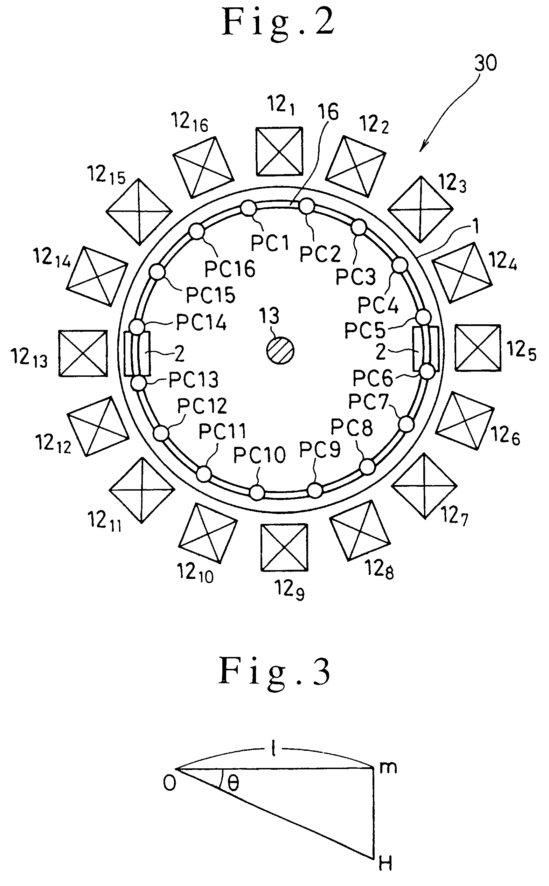

First, referring to Figs. 3 to 8, the principle of the power plant of the present invention will be described.

In recent years, there is a demand for the development of a power plant which enables taking out a rotational energy greater than an input energy in accordance with the requirement for resource saving and energy saving.

In Fig. 3, m denotes the magnetic force (constant) of permanent magnet. H and I denote the magnetic field of electromagnet (magneto coil) and the distance between rotational center O and the permanent magnet, respectively. Further, $\theta$ denotes the angle made by the electromagnet and rotational center against the position of permanent magnet. When M, T and W represent the magnetic force of electromagnet, the torque and the workload, respectively, there exists the following relationship:

$$T = m \cdot I \cdot H \cdot \sin \theta.$$

When T = W is assumed, generally, the workload relationship is Wo $\leq$ Win, wherein Wo represents the output workload, and Win the input workload. The input power applied to the electromagnet is attenuated by, for example, coil loss.

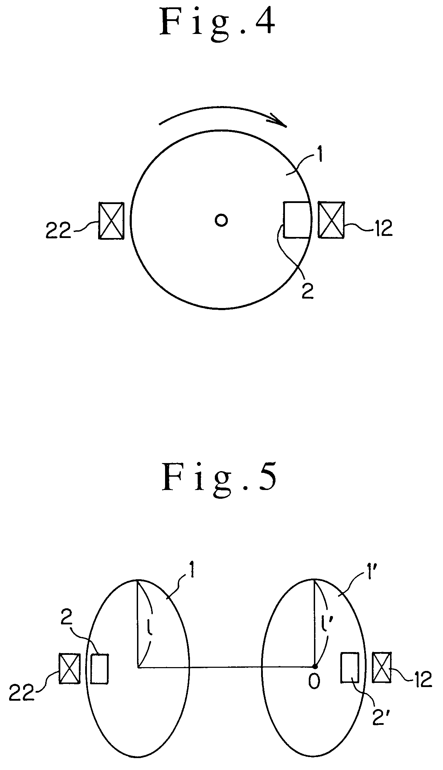

Referring now to Fig. 4, a model of power plant, wherein permanent magnet 2 (magnetic force energy M) is arranged in an outer periphery of rotor 1, electromagnet 12 is arranged in the vicinity of the outer periphery of rotor 1, and, further, magneto coil 22 is arranged in the vicinity of the outer periphery of rotor 1, will be considered.

When the rotor 1 is rotated by the magnetic force energy of electromagnet 12, $L_1$, the energy M x $L_2$ wherein $L_2$ represents the magnetic force energy of magneto coil 22 is produced at the magneto coil 22 by the attractive force (or repulsive force) between permanent magnet 2 and electromagnet 12, M x $L_1$. Thus, the relationship (H x $L_1$) = (M x $L_2$) is established.

Because the magnetic force energy M of permanent magnet 2 is constant, the magnetic force energy of electromagnet 12, $L_1$, is equal to the magnetic force energy of magneto coil 22, $L_2$. $L_1 = L_2$.

That is, even if the relationship (M x $L_2$) > (M x $L_1$) is intended, it becomes impossible to simultaneously utilize the permanent magnet 2 in the above model of power plant. In other words, when (M x $L_2$) > (M x $L_1$) is to be realized, any single permanent magnet 2 cannot be simultaneously utilized in constitutions using the same rotor 1.

Now, referring to Fig. 5, another model of power plant is considered. In this model of power plant, two rotors l, l' are employed. Permanent magnet 2' having magnetic force energy M' which is, for example, twice that of the above permanent magnet 2 (magnetic force energy M), M' = 2M, is arranged in an outer periphery of rotor 1'. Electromagnet 12 is arranged in the vicinity of the outer periphery of rotor l'. Permanent magnet 2 is arranged in an outer periphery of rotor l, and, further, magneto coil 22 is arranged in the vicinity of the outer periphery of rotor l. In this model of power plant, the relationship (M x $L_2$) = (M / 2 x $L_2$) is established. Thus, the relationship between the magnetic force energy of electromagnet 12, $L_1$, and the magnetic force energy of magneto coil 22, $L_2$, becomes ($L_1 < L_2$).

However, actually, there exist influences of, for example, the frictional resistance of rotor 1, power loss and material weight, and the magnetic force of magneto coil 22 competes with the magnetic force of electromagnet 12. Therefore, it is difficult to realize the relationship: input power < output (output energy).

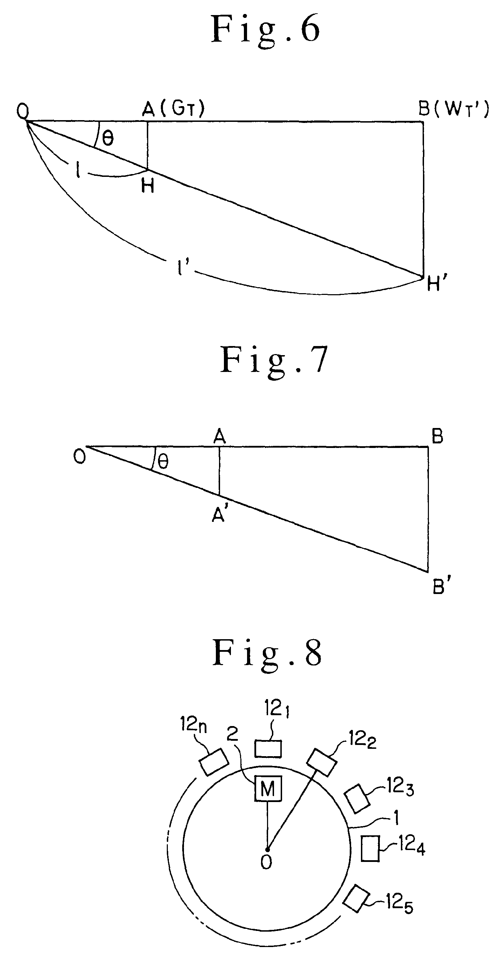

Referring to Fig. 6, the point of I·sin $\theta$ from the rotational center O is referred to as A (position of magneto coil), and the point of I'·sin $\theta$ from the rotational center O is referred to as B (position of electromagnet). I' = 2-I is assumed. The energies at point A and point B are defined as mH and m'H', respectively.

Under these conditions, the generated energy at point A is expressed by the formula: $G_T = m \cdot I \cdot H \cdot \sin \theta$, and the driving power at point B is expressed by the formula: $W_{T'} = m \cdot I' \cdot H' \cdot \sin \theta$. Because the workloads at point A and point B are equal to each other, the relationship: $m \cdot I \cdot H \cdot \sin \theta = m' \cdot I' \cdot H' \cdot \sin \theta$ is established. By introducing the relationship I' = 2·I, the workload at point B is expressed as $2 \cdot m' \cdot I \cdot H' \cdot \sin \theta$. When m = m', $m \cdot I \cdot H \cdot \sin \theta = 2 \cdot m' \cdot I \cdot H' \cdot \sin \theta$.

Accordingly, $I \cdot H \cdot \sin \theta = 2 \cdot I \cdot H' \cdot \sin \theta$. Therefore, H' = H/2.

Consequently, in theory, the driving power at point B, $W_{T'}$, can be smaller than the generated energy at point A, $G_T$. For example, $W_{T'}$ can be 1/2 of $G_T$.

Actually, referring to Fig. 7, the potential energies at points A and A' are different from each other (points A and A' do not lie on the same plane), and also the potential energies at points B and B' are different from each other (points B and B' do not lie on the same plane). Therefore, their workloads are different from each other.

The principle of the present invention is to, referring to Fig. 8, arrange, for example, n (positive integer) electromagnets $12_1$, $12_2$, $12_3$, ..., $12_n$ at angular intervals of, for example, ($\theta$/2) in the vicinity of an outer periphery of rotor 1 and sequentially exciting the electromagnets $12_1$, $12_2$, $12_3$, ..., $12_n$ so that attractive force or repulsive force is produced between permanent magnet 2 and oppositely positioned one of the electromagnets $12_1$, $12_2$, $12_3$, ..., $12_n$ to thereby enable rotating and driving the rotor 1 with an input power less than the output (output power) taken out from the power plant.

## EFFECT OF THE INVENTION

The present invention enables providing a power plant which has a simple constitution and from which a rotational energy greater than an energy equivalent to an input power applied to an electromagnetic force imparting means can be taken out, which power plant includes a generator from which a power energy greater than the input power can be taken out.

Further, the present invention enables providing a power plant which utilizes a torque of rotor brought about by a dimensional difference between the dimension of position of n electromagnets and the dimension of position of magneto coil of generator, has a simple constitution and can realize takeout, from a generator, of an output energy greater than an energy equivalent to an input power applied to an electromagnetic force imparting means.

Still further, the present invention enables providing a power plant which has a constitution having a rotor of sandwich structure comprising n permanent magnet groups each consisting of a combination of N pole and S pole and n exciting coils, which can realize efficient takeout, from a turning force takeout part, of a rotational energy greater than an energy equivalent to an input power applied to an electromagnetic force imparting means, and which can realize efficient takeout, from a generator, of an output energy greater than an energy equivalent to an input power applied to an electromagnetic force imparting means.

PREFERRED EMBODIMENT OF THE INVENTION

The present invention will now be described in greater detail with reference to the following Embodiments, which should not be construed as limiting the scope of the invention.

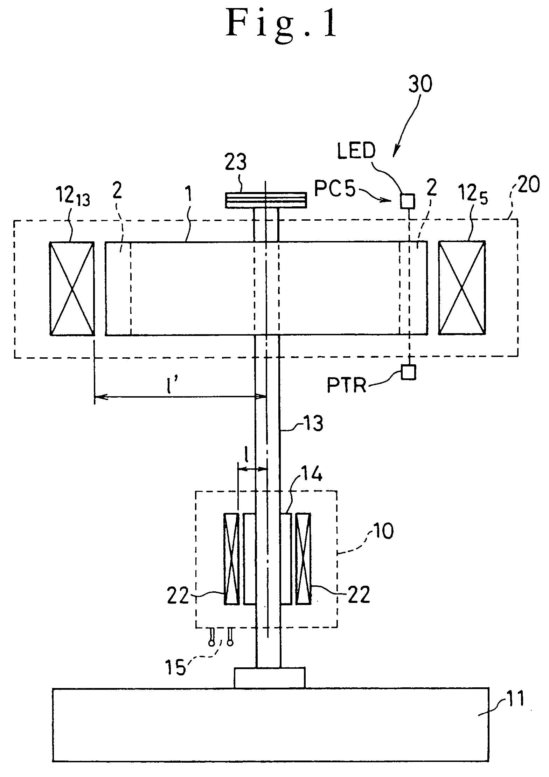

One embodiment of the present invention based on the above principle will be described with reference to Figs. 1 and 2 and Figs. 9 to 11.

Power plant 30 according to one embodiment of the present invention, shown in Figs. 1 and 2, has such a structure that base 11 rotatably supports axle 13 perpendicularly erected thereon and that a lower part of the axle 13 is fitted with generator 10 for taking out an output power while an upper part of the axle 13 is fitted with motor unit 20 to which an input power is fed, including disk-shaped rotor 1 fixed to the axle 13. An end portion of the axle 13 is fitted with a power takeout part, for example, pulley 23.

The generator 10 comprises rotator 14 fixed to the axle 13 and, arranged round the outer periphery of the rotator 14, magneto coil 22, so that any output power generated is taken out from output terminals 15. The dimension (radius of inside wall) of magneto coil 22 from the center of the axle 13 is referred to as "l".

In the motor unit 20, permanent magnets 2 (two disposed in 180° arrangement in this Embodiment) are arranged in the outer periphery of rotor 1 having its center fixed to the axle 13. Also, for example, sixteen electromagnets $12_1$, $12_2$, $12_3$, ..., $12_{16}$ are arranged at

angular intervals of, for example, $(\theta/2)$, which constitute an electromagnetic force imparting means, round the outer periphery of rotor 1. The dimension of each of the sixteen electromagnets $12_1$, $12_2$, $12_3$, ..., $12_{16}$ from the center of the axle 13 is referred to as "l'" ($l < l'$).

Further, sixteen photocouplers PC1, PC2, PC3, ..., PC 16 as rotational position detecting means, which detect the rotational position of permanent magnets 2, are arranged so as to face the rotor 1 in corresponding relationship to the sixteen electromagnets $12_1$, $12_2$, $12_3$, ..., $12_{16}$.

Specifically, referring to Figs. 1 and 2, for example, light emitting diode LED of photocoupler PC5 is disposed above the passage zone of permanent magnet 2 fixed to the rotor 1. Phototransistor PTR of the photocoupler PC5 is disposed below circular channel 16 provided in the rotor 1. The rotational position of permanent magnet 2 is detected by crossing of the optical path between the light emitting diode LED and the phototransistor PTR caused by the rotation of the permanent magnet 2. In conformity with the rotational position of permanent magnet 2, the corresponding electromagnet $12_5$ is driven.

The arrangement of the other fifteen photocouplers PC1, PC2, PC3, ..., PC 16 is the same as that of the photocoupler PC5.

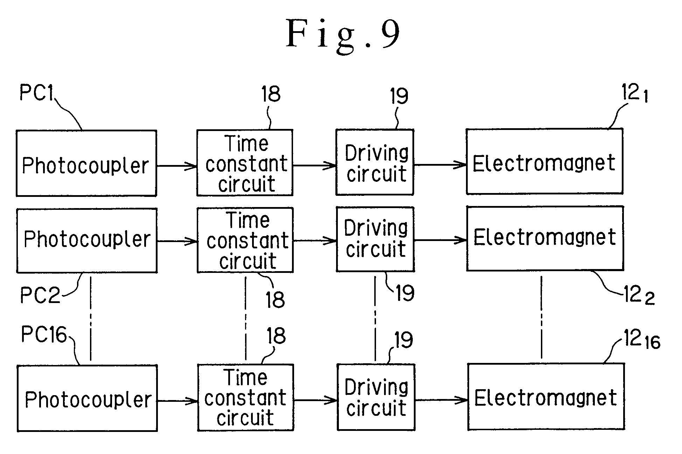

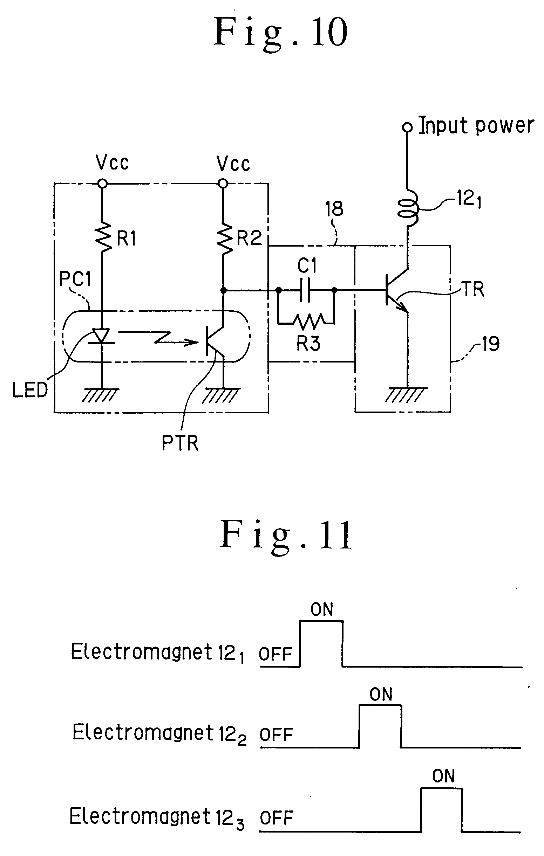

Fig. 9 is a block diagram of the above-mentioned rotational position detecting means. Fig. 10 is a circuit diagram including photocoupler PC1 as a representative example of the rotational position detecting means, time constant circuit 18, driving circuit 19 having transistor TR and electromagnet $12_1$ according to the present invention. Fig. 11 is a diagram of the respective driving waveforms of electromagnets $12_1$, $12_2$, $12_3$, ....

Referring to Fig. 10, the time constant circuit 18 consists of a parallel circuit of condenser C1 and resistor R3. Mark R1 denotes a bias resistor for the light emitting diode LED. Mark R2 denotes a bias resistor for the phototransistor PTR.

In the power plant 30 of the above constitution, the sixteen electromagnets $12_1$, $12_2$, $12_3$, ..., $12_{16}$ arranged in the vicinity of the outer periphery of the rotor 1 are connected to an input power source (not shown). The rotor 1 is actuated. The position of permanent magnet 2 rotated with the rotor 1 is detected by means of the photocouplers PC1, PC2, PC3, ..., PC 16. The corresponding electromagnets $12_1$, $12_2$, $12_3$, ..., $12_{16}$ are sequentially excited as shown in Fig. 11. As a result, rotary driving force is imparted to the rotor 1 and the axle 13 by the attractive force or repulsive force between the electromagnets $12_1$, $12_2$, $12_3$, ..., $12_{16}$ and the permanent magnets 2. Thus, the rotor 1 and the axle 13 are driven and rotated.

Accordingly, the rotator 14 of the generator 10 is rotated together with the axle 13. Electricity is produced by the magneto coil 22 disposed round the outer periphery of the rotator 14, thereby enabling takeout of an output power (generated energy) from the output terminals 15.

In the use of this power plant, as apparent from the above description of the principle of the present invention and from the above relationship between the dimension of each of the sixteen electromagnets $12_1$, $12_2$, $12_3$, ..., $12_{16}$ of the power plant 30 from the center of the axle 13, namely l', and the dimension (radius of inside wall) of the magneto coil 22 from the center of the axle 13, namely l, the input power to the sixteen electromagnets $12_1$, $12_2$, $12_3$, ..., $12_{16}$ can be lower than the output power taken out from the output terminals 15 of the generator 10. In other words, a rotational energy greater than an energy equivalent to the input power to the sixteen electromagnets $12_1$, $12_2$, $12_3$, ..., $12_{16}$ can be taken out through the pulley 23 fixed to the axle 13 in conformity with the demand for resource saving and energy saving. Furthermore, power plant 30 enabling takeout of an output power greater than the input power can be realized.

The number of poles of the above electromagnet group can be arbitrary. For example, use can be made of 8, 12 or 24 poles. The rotational position detecting means is not limited to the above photocoupler, and various sensors can be employed. The energy saving can be enhanced by the use of 2-stage, 3-stage or more-stage motor units.

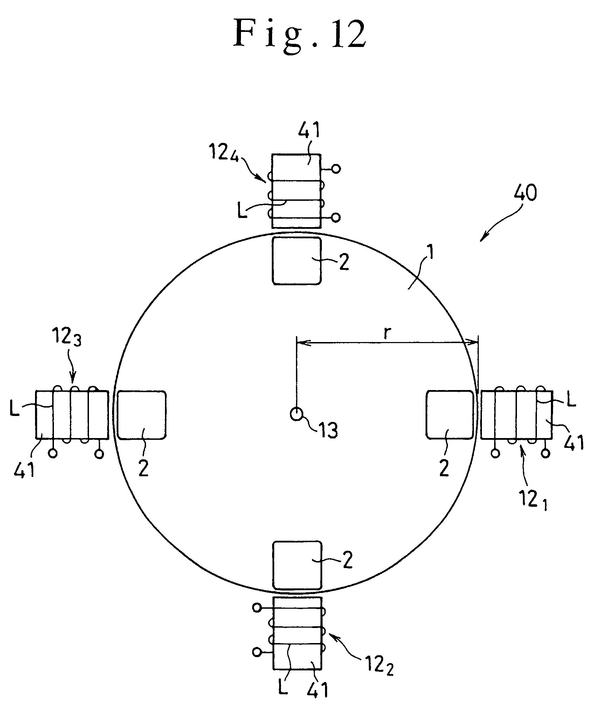

Now, other embodiments of the present invention will be described with reference to Figs. 12, 13, 14 and 15.

In the power plant 40 shown in Fig. 12, four permanent magnets 2 are disposed at 90° angular intervals in the outer periphery of rotor 1. Four electromagnets $12_1$, $12_2$, $12_3$ and $12_4$ which constitute an electromagnetic force imparting means and are composed of, for example, iron core 41 and coil L are arranged in the vicinity of the outer periphery of rotor 1. Axle 13 of the power plant 40 is fitted with a pulley (not shown).

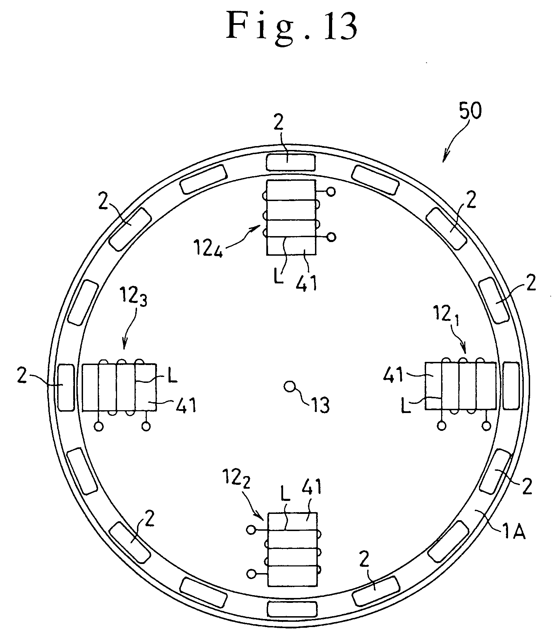

In the power plant 50 shown in Fig. 13, sixteen permanent magnets 2 are disposed in the outer periphery of ring-shaped rotor 1A. Four electromagnets $12_1$, $12_2$, $12_3$ and $12_4$ which are composed of, for example, iron core 41 and coil L are arranged in the vicinity of the inside wall of ring-shaped rotor 1A. Axle 13 of the power plant 50 is fitted with a pulley (not shown).

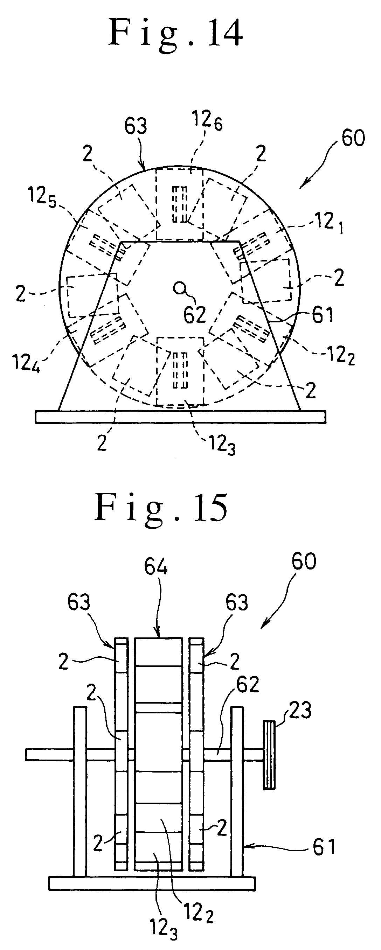

The power plant 60 shown in Figs. 14 and 15 has such a sandwich structure that electromagnet disk 64 fitted with six electromagnets $12_1$, $12_2$, $12_3$, $12_4$, $12_5$ and $12_6$ is interposed between a pair of disks 63, 63 each fitted with six permanent magnets 2, all the disks rotated round shaft 62 supported by frame 61. An end portion of the shaft 62 is fitted with pulley 23.

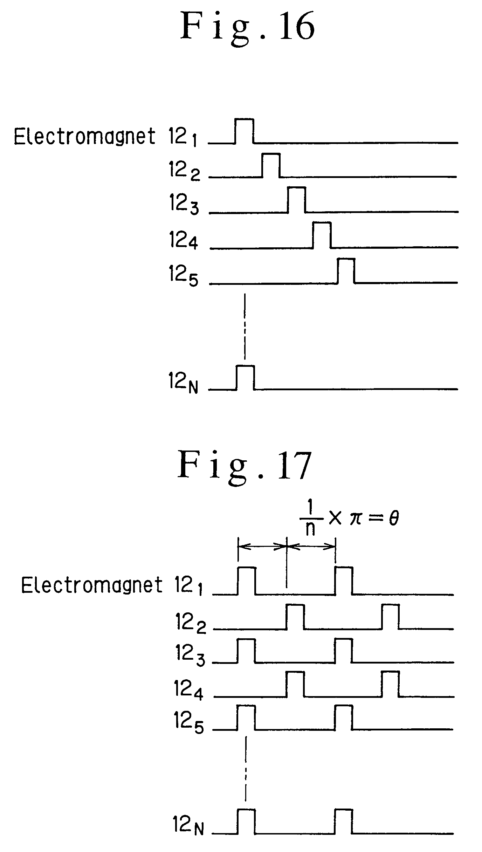

Figs. 16 and 17 are timing charts showing the driving waveforms of coils L exhibited when n electromagnets $12_1$, $12_2$, $12_3$, ..., $12_n$ are used in a power plant. In the case of Fig. 16, n coils L are sequentially driven on at given time intervals. In the case of Fig. 17, among the n coils L, odd-numbered coil L and even-numbered coil L are alternately driven on.

Now, for example, electromagnet $12_1$ composed of iron core 41 and coil L is studied. When r represents the dimension of electromagnet $12_1$ from the center of the axle 13, L represents the magnetic force of electromagnet $12_1$ and M represents the magnetic force of permanent magnet 2, the force F between the electromagnet $12_1$ and the permanent magnet 2 is expressed by the formula: $F = ML/r^2$. When, for example, M = 140 and L = 10 (unit omitted), ML = 1400. With respect to, for example, the attractive force, since the attractive force is 1400, for attaining repulsion, it is needed to feed the electromagnet $12_1$ with a power equivalent to 10.

Therefore, when an air core or homologous one is used as the iron core 41 of the electromagnet $12_1$, the power plant can be driven with low power. When an air core is used as the iron core 41, 140 x 0, that is, the attractive force is nil in the event that electricity is not passed. Thus, it is practically advantageous to appropriately regulate the amount of iron core as a constituent of the electromagnet and to employ a core homologous to an air core.

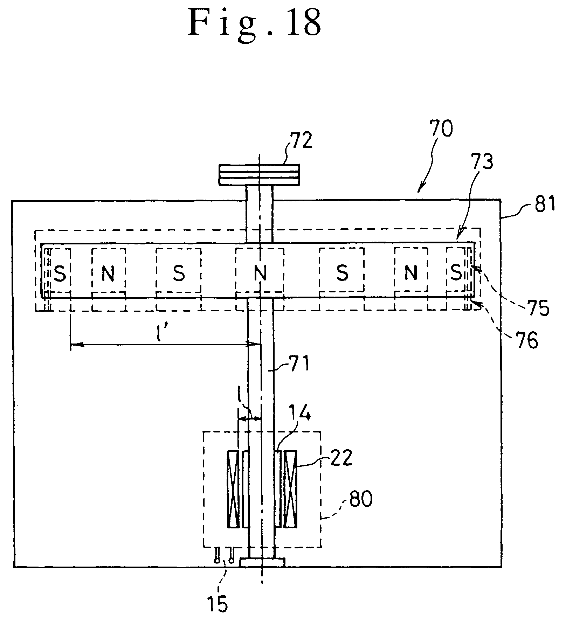

Further other embodiments of the present invention will be described with reference to Figs. 18 to 20.

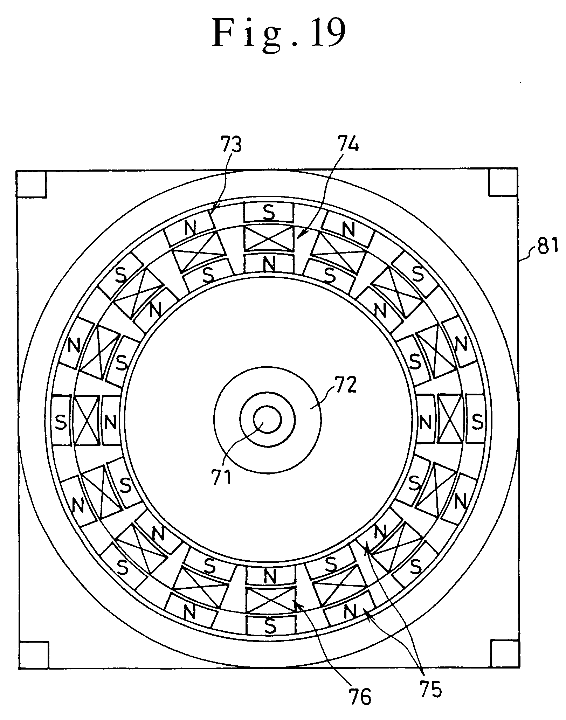

The power plant 70 shown in Figs. 18 and 19 includes, accommodated in box-shaped cage 81, axle 71 fitted with pulley 72 as a turning force takeout part in an arrangement exposed from the cage 81; rotor 73 arranged in an upper part, referring to Fig. 18, of the axle 71; electromagnetic force imparting means 74 for driving and rotating the rotor 73; and generator 80 arranged in a lower part, referring to Fig. 18, of the axle 71, which has the same structure as that of the generator 10 including rotator 14 and magneto coil 22 as shown in Fig. 1. The rotor 73 comprises combinations of N pole and S pole oppositely arranged with a given spacing. The rotor 73 comprises groups 75 each consisting of n (16 in this embodiment) permanent magnets arranged circularly with equal spacings.

The electromagnetic force imparting means 74 comprises circularly and concentrically arranged n exciting coils 76 interposed between opposite N and S poles of the permanent magnet groups 75 of the rotor 73. The rotor 73 is driven and rotated by a rotary driving force produced by the magnetic action between the n exciting coils 76, energized by an input power, and the groups 75 of n permanent magnets. The interstice between each of N and S poles of the permanent magnet groups 75 and the exciting coils 76 is set for, for example, 3 mm.

A rotational energy greater than an energy equivalent to the input power to the electromagnetic force imparting means 74 can be taken out from the pulley 72 fixed to the axle 71 in accordance with the aforementioned principle by, with respect to the axle 71, causing the dimension of position, l', of n exciting coils 76 of electromagnetic force imparting means 74 which impart a rotary driving force to the rotor 73 to be greater than the dimension of position of magneto coil 22 of the generator 80. In the power plant 70 of Figs. 18 and 19, the rotor 73 has a single-stage sandwich structure consisting of the n exciting coils 76 interposed between the permanent magnet groups 75.

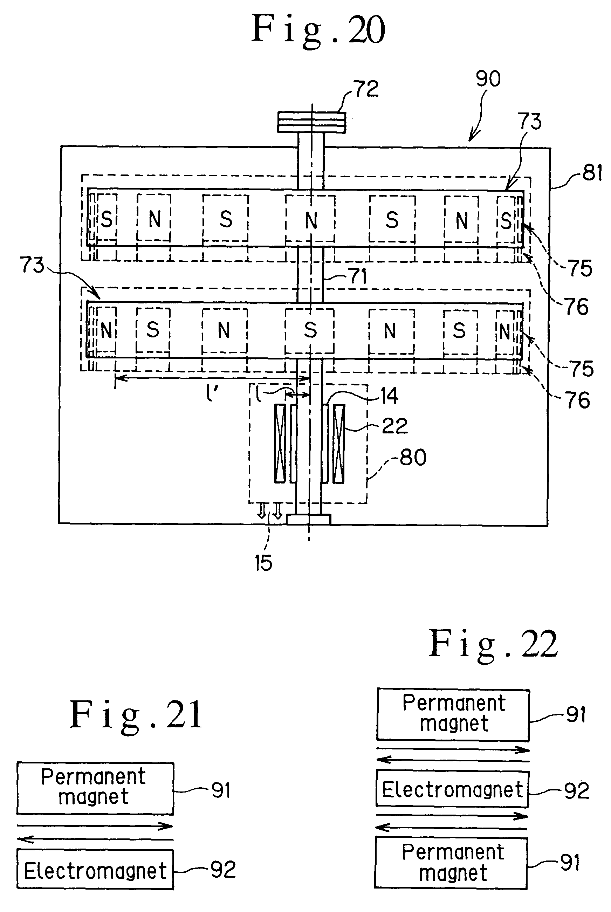

Furthermore, referring to Fig. 20, there can be provided power plant 90 fitted with rotor 73 composed of two sandwich structures each comprising permanent magnet groups 75 and n exciting coils 76.

Now, the relationship between energy input and output is studied with respect to the above power plant 70. Experimental results suggest that, referring to Fig. 21, the attractive force (or repulsive force) between electromagnet (exciting coil) 92 and permanent magnet 91 per W of input is about in the range of 66 to 99 g in the use of permanent magnet 91 of 4500 gausses. Therefore, at an input of 100 W, the attractive force (or repulsive force) is about in the range of 6600 to 9900 g. When the dimension of position of magneto coil 22 of generator 80 (l) is 120 mm while the dimension of position of exciting coil 76 of rotor 73 (l') is 5 times l, i.e., 600 mm, the axle 71 can gain a torque of about 33 to 49.5 kg. In that instance, the rotational speed of the rotor 73 is in the range of about 700 to 1600 rpm.

Further, because this rotor 73 has a sandwich structure of permanent magnet groups 75 and n exciting coils 76, the energy of the exciting coils 76 can be effectively utilized. Experiments suggest that the attractive force (or repulsive force) is enhanced as much as about 50% by a sandwich structure of electromagnet (exciting coil) 92 interposed between a pair of permanent magnets 91, 91 as shown in Fig. 22 over the use of only one permanent magnet 91 as shown in Fig. 21. Specifically, the attractive force per W of input is about 140 g in the structure of Fig. 22. On the other hand, the power plant 90 fitted with two-stage arranged rotor 73 as shown in Fig. 20 enables realizing a greater efficiency increase and enables obtaining a greater torque and a greater generated energy.

In the experiments, the magnetic field of permanent magnet 91 was measured by the use of a gauss meter. The torque of axle 71 and the rotational speed of rotor 73 were measured by the use of torque meter (model SS-200 manufactured by Ono Sokki K.K.) and revolution counter (model HT-5500 manufactured by Ono Sokki K.K.), respectively.

**Claims**

1. A power plant comprising:

    an axle fitted with a turning force takeout part and,
    coaxially arranged thereon, a generator capable of outputting a power and a rotor driven and rotated by an electromagnetic force imparting means, said electromagnetic force imparting means capable of producing an electromagnetic force with the use of an input power,

    wherein, with respect to the axle, a dimension of position of imparting of a rotary driving force to the rotor in the electromagnetic force imparting means is larger than a dimension of position of output power production in the generator to thereby enable takeout, from the turning force takeout part of the axle, of a rotational energy greater than an energy equivalent to an input power applied to the electromagnetic force imparting means.

2. A power plant as claimed in claim 1, comprising:

    an axle fitted with a turning force takeout part, a rotor arranged in a first location of the axle, driven and rotated by an electromagnetic force imparting means and having permanent magnets in its outer periphery, said electromagnetic force imparting means fitted with n electromagnets and capable of producing an electromagnetic force with the use of an input power, and a generator fitted with a magneto coil and arranged in a second location of the axle,

    wherein, with respect to the axle, a dimension of position of n electromagnets capable of imparting of a rotary driving force to the rotor in the electromagnetic force imparting means is larger than a dimension of position of magneto coil in the generator to thereby enable takeout, from the turning force takeout part of the axle, of a rotational energy greater than an energy equivalent to an input power applied to the electromagnetic force imparting means.

3. A power plant as claimed in claim 1, comprising:

    an axle fitted with a turning force takeout part, a rotor arranged in a first location of the axle and fitted with groups of circularly arranged n permanent magnets, said permanent magnets composed of combinations of N pole and S pole oppositely arranged with a given spacing therebetween,
    an electromagnetic force imparting means fitted with circularly and concentrically arranged n exciting coils interposed between the N poles and S poles of each of the permanent magnet groups of the rotor, said n exciting coils energized by an input power and cooperating with the groups of n permanent magnets to thereby exert such a magnetic action that a rotary driving force is produced to thereby drive and rotate the rotor, and
    a generator fitted with a magneto coil and arranged in a second location of the axle,

wherein, with respect to the axle, a dimension of position of n electromagnets capable of imparting of a rotary driving force to the rotor in the electromagnetic force imparting means is larger than a dimension of position of magneto coil in the generator to thereby enable takeout, from the turning force takeout part of the axle, of a rotational energy greater than an energy equivalent to an input power applied to the electromagnetic force imparting means.

4. A power plant as claimed in claim 3, wherein, in the rotor, the groups of n permanent magnets composed of N pole and S pole combinations are combined with the n exciting coils of the electromagnetic force imparting means in a single-stage arrangement or plural-stage arrangement.

# Fig.1

# Fig.2

# Fig.3

# Fig.4

# Fig.5

# Fig.6

# Fig.7

# Fig.8

# Fig.9

EP 1 253 703 A1

# Fig.10

Input power

Vcc    Vcc

R1    R2

18    12₁

PC1    C1

R3    TR

LED    19

PTR

# Fig.11

Electromagnet 12₁    OFF    ON

Electromagnet 12₂    OFF    ON

Electromagnet 12₃    OFF    ON

# Fig.12

# Fig.13

# Fig.14

# Fig.15

# Fig.16

Electromagnet $12_1$

$12_2$

$12_3$

$12_4$

$12_5$

$12_N$

# Fig.17

$$\frac{1}{n} \times \pi = \theta$$

Electromagnet $12_1$

$12_2$

$12_3$

$12_4$

$12_5$

$12_N$

# Fig.18

# Fig.19

# Fig.20

S   N   S   N   S   N   S

N   S   N   S   N   S   N

Permanent
magnet — 91

→

←

Electromagnet — 92

# Fig.21

Permanent
magnet — 91

→

←

Electromagnet — 92

# Fig.22

Permanent
magnet — 91

→

←

Electromagnet — 92

←

Permanent
magnet — 91

**European Patent Office**

# EUROPEAN SEARCH REPORT

Application Number

EP 01 11 4425

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | JP 2001 190058 A (OTA SADATADA;YASUDA TERUYOSHI) 10 July 2001 (2001-07-10) * abstract * | 1-4 | H02K53/00 |
| X | DE 39 38 576 A (SCHOLZ LUDWIG) 23 May 1991 (1991-05-23) * column 1, line 36 - column 2, line 62; figures 1-8 * | 1-4 | |
| X | JP 60 170460 A (SATOSHI UCHIDA) 3 September 1985 (1985-09-03) * abstract * | 1,2 | |
| X | JP 61 010973 A (TADAHISA ENDOU) 18 January 1986 (1986-01-18) * abstract * | 1-4 | |
| X | JP 58 116078 A (SOUKICHI MURAKAMI) 11 July 1983 (1983-07-11) * abstract * | 1-4 | |
| | | | **TECHNICAL FIELDS SEARCHED (Int.Cl.7)** |
| | | | H02K |

The present search report has been drawn up for all claims

| Place of search | Date of completion of the search | Examiner |
|---|---|---|
| THE HAGUE | 2 April 2002 | Davis, A |

## ANNEX TO THE EUROPEAN SEARCH REPORT
## ON EUROPEAN PATENT APPLICATION NO.

EP 01 11 4425

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2002

| Patent document cited in search report | | Publication date | Patent family member(s) | | Publication date |
|---|---|---|---|---|---|
| JP 2001190058 | A | 10-07-2001 | NONE | | |
| DE 3938576 | A | 23-05-1991 | DE | 3938576 A1 | 23-05-1991 |
| JP 60170460 | A | 03-09-1985 | NONE | | |
| JP 61010973 | A | 18-01-1986 | NONE | | |
| JP 58116078 | A | 11-07-1983 | NONE | | |

EPO FORM P0459

For more details about this annex : see Official Journal of the European Patent Office, No. 12/82